# EUROPEAN PATENT SPECIFICATION

(11) **EP 2 383 947 B1**
(45) Date of publication and mention of the grant of the patent: **31.10.2012**
(21) Application number: 10161370.1
(22) Date of filing: 28.04.2010
(51) Int. Cl.: H04L 12/58, H04L 12/18, H04L 29/08

(54) **System and method for distributing messages to an electronic device based on communications between devices**
System und Verfahren zur Verteilung von Nachrichten an eine elektronische Vorrichtung basierend auf der Kommunikation zwischen Vorrichtungen
Système et procédé de distribution de messages dans un dispositif électronique basé sur des communications entre les dispositifs

(43) Date of publication of application: 02.11.2011
(73) Proprietor: Research In Motion Limited, Waterloo, ON N2L 3W8 (CA)
(72) Inventor: Marks, Bradley Michael, Mississauga Ontario L4W 0B5 (CA); Gunton, William John, Waterloo Ontario N2V 1K8 (CA)
(74) Representative: Moore, Barry

(56) References cited:
- WO-A1-2009/072741
- US-A1- 2007 076 646
- US-A1- 2009 216 620

## Description

### FIELD OF DISCLOSURE

The disclosure described herein relates to a system and method for distributing messages and / or content to an electronic device, such as a mobile electronic communication device. In one arrangement the disclosure relates to system and method for cascading messages from one electronic device to the next in a virtual daisy chain within a mobile telecommunication network.

### BACKGROUND

The provision of data message which are transmitted to a user of a mobile device is typically provided without consideration to the user. In such transmissions, the data messages are typically provided in a push environment being pushed directly to the mobile electronic communication device associated with the user. This pushing of the messages takes no account of the availability of the user to receive the messages or indeed whether it is appropriate for the user to receive said messages. Furthermore, the volume of messages may be transmitted at a level which will simply overwhelm the user or the network. US patent publication no. 2009/0216620 discloses a system for providing a targeted advertisement service in a social network.

Messaging service providers when transmitting messages to end users establish discrete communication links with the respective end user devices. It will be appreciated that if a message is required to be sent to one hundred million end users, it would be necessary to set up one hundred million discrete communication links. Establishing such a vast number of communication links consumes a vast amount of processing power.

There is a need for a system and method which addresses one or more of these deficiencies.

### BRIEF DESCRIPTION OF THE DRAWINGS

Embodiments of the present disclosure will now be described, by way of example only, with reference to the accompanying drawings, in which:
- Fig. 1: is a schematic diagram of devices in a communication network, where the network includes a media server that provides communications to a first and a second device in the network according to an embodiment;
- Fig. 2A: is a flowchart of an exemplary process executed by a first device in Fig. 1 that is initiating a communication with a second device in Fig. 1, as the first device processes a media to be sent to the second device;
- Fig. 2B: is a flowchart of exemplary processes executed by the second device in Fig. 2A that is receiving the communication from the first device of Fig. 2A, as the second device processes the media;
- Fig. 3: is a flowchart of exemplary processes executed by the media server of Fig. 1, as it identifies media to send to the group of devices of Fig. 1;
- Fig. 4: is a schematic representation of the first device of Fig. 1;
- Fig. 5: is a block diagram of certain internal components of the device in Fig. 4;
- Fig. 6: is a block diagram of two movement detection systems of in the device of Fig. 4; and
- Fig. 7: is a block diagram of components of a media server of Fig. 1.

### DETAILED DESCRIPTION OF AN EMBODIMENT

The description which follows and the embodiments described therein are provided by way of illustration of an example or examples of particular embodiments of the principles of the present disclosure. These examples are provided for the purposes of explanation and not limitation of those principles and of the present disclosure. In the description which follows, like parts are marked throughout the specification and the drawings with the same respective reference numerals.

In a first aspect, a method for distributing and tracking messages to electronic devices is provided, as defined by independent claim 1

In the method, the first device may be sending a communication to the second device; the attribute may be associated with the first device; and the first device may provide the notification.

The method may further comprise: identifying a second media that matches the at least one attribute associated with the first device; transmitting the second media to the first device ; and upon receipt of a notification of approval of the second media from the first device, transmitting the second media from the first device to the second device.

The method may further comprise embedding the first media in the communication; and transmitting the communication from the first device to the second device.

The method may further comprise generating the first media on the second device when the second device has accepted the first media.

The method may further comprise embedding the first media in a second communication; and transmitting the second communication from the first device to the second device.

The method may further comprise providing a preview of the first media to the first device.

In the method, the first media and the second media may be transmitted to the first device prior to the identifying that the first device is sending the communication to the second device.

The method may further comprise providing previews of the first media and the second media to the first device in a graphical user interface (GUI), where the GUI provides a selection interface for a user of the device to select either of the first media or the second media for transmission to the second device.

In the method, the attribute may relate to a preference provided from a social network site relating to a user of the first device.

The method may further comprise utilizing additional data relating to at least one of the first and second devices to determine an activity state for the at least one of the first and second devices; and identifying a format of the first media based on the additional data.

In the method, for the second device its activity state may relate to a location of the second device.

In a second aspect, a server for distributing and tracking messages to electronic devices is provided, as defined by independent claim 12.

In the server, the attribute may be associated with the first device; the first device may provide the notification. The first device may be sending a communication to the second device. Also, the identification module may further identify a second media that matches the at least attribute associated with the first device. Also, the data transmission module may further transmit the second media to the first device with the first media; and upon receipt of a notification of approval of the second media, may transmit the first media to the second device.

In the server, the data transmission module may further embed the first media in the communication; and transmit the communication from the first device to the second device.

In the server, the data transmission module may further transmit the first media and the second media to the first device prior to having the first device identify that it is sending the communication to the second device.

In the server, the data transmission module may further provide previews of the first media and the second media to the first device for display in a graphical user interface (GUI), wherein the GUI provides a selection interface for a user of the device to select either of the first media or the second media for transmission to the second device.

In the server, the attribute may relate to a preference provided from a social network site relating to a user of the first device.

In the server, the data transmission module may further utilize additional data relating to at least one of the first and second devices to determine an activity state for the at least one of the first and second devices; and may identify a format of the first media based on the additional data.

In other aspects, various combinations of sets and subsets of the above aspects are provided.

Generally, an embodiment provides a device, system and method to distribute and manage communications that are provided to an electronic device, such as, but not limited to, a (portable) wireless communication device, a laptop computer or a personal computer. Generally media may contain any one or more of a text message, indicator, graphic, sound or other audio/visual content. Media may be provided to the device in various forms and media, including as a message (for example, an email, a text message, or a voice mail message), as an embedded link in a website page that is accessed to the device, as a streamed content to the device. Also, media may be embedded and / or integrated into an application such that the media is generated on the device without any request or further action required by a user of the device. For example, media may be generated as a visual output within a web page or as an output while an application is operating (e.g. as a banner during a telephone call). For the sake of convenience, and not limitation, the terms "media" and "message" as used herein include any data or communication that is provided to the device. Media may be provided through one or more servers logically connected to the network. However, media may also be provided from other devices in the network. A message may include any communication between devices that includes media.

One feature of an embodiment provides a first media to a device that is communicating with another device. The device may be sending a communication to the other device. In particular, an embodiment provides a facility for a first device that initiates a communication to a second device to identify media that can be provided to the second device. For example, if the first device is sending an email communication to the second device, an embodiment can identify media that can be provided to the second device around the time when the email is sent.

The embodiment may be deployed where it is desirable to transmit a message to multiple end users. The present inventors have realised that the processing requirements of a messaging provider may be offloaded to end users by utilizing the transmitters of at least some of the end user devices. In an exemplary embodiment, the messaging provider initially identifies a first handheld device that is in communication with a second handheld device. The server then identifies a first media that matches at least one attribute associated with at least one of said first and second handheld devices. The first media is transmitted from a media server over a telecommunications network to the first handheld device. The first handheld device then notifies the media server that it received the first media and approved it for further transmission. Subsequently to the media server receiving the approval, the first handheld device transmits the first media to the second handheld device. It will be appreciated that the media which originated at the media server is sent to the second handheld device without the need to establish a separate communication link between the media server and the second handheld device. Instead the first handheld device establishes the communication link with the second handheld device thereby eliminating the need for the media server to establish a communications link with the second handheld device. However, the media server is informed by the first handheld device that it has undertaken to transmit the media to the second handheld device. In this way rather than creating two parallel communication links from server to the first and second end users, a series type link is generated comprising a first link between the media server and first handheld device and a second link between the first handheld device and the second handheld device. The first and second handheld devices and the media server may be considered as three separate nodes which are arranged in series in a virtual daisy chain topology. The media may be generated on the display or through the speaker of the device.

By providing a change in how the media items are distributed technically, a system and method in accordance with the present teaching may be deployed to provide for distribution of specific media items such as advertising content and the like. In this way it is technically possible to enable provision of communication devices to users based on an advertisement distribution business model. The company may provide the users with the devices and charge either a free or reduced usage rates. In lieu of being charged a higher usage rate by the company, the user of a device agrees to accept advertisements on the device. As part of agreement, the user may be obligated to view or have sent to it a certain number of advertisements in a period of time. Additionally, when a user is communicating with another device the agreement may oblige the user to forward an advertisement to the receiving party as part of the communication that the user is sending. An embodiment provides facilities to manage the processing of the advertisements both at the user's device and at the recipient's device.

Additional features are provided by an embodiment. To assist with an understanding of an exemplary practical application of a system and method in accordance with the present teaching, the media items that may be transmitted will be described with reference to one exemplary media item type, that of advertising content. When a device is communicating with another device and when an embodiment is providing an advertisement to the other device, a selection regime is enabled where the advertisement is selected from a set of advertisements. The set of advertisements is provided to the device and is based on matching advertisements to attributes associated with the device and / or the user of the device. The attributes may be based on interests/preferences/settings/topics/characteristic that may be associated with settings stored in the device on a server. The device may be provided with a preview set of the advertisements and then the user may select one advertisement that is to be provided to the other device. The form of the communication may affect the format of the advertisement provided. If the devices are communicating through data transmissions, namely through an email or text message, the selected advertisement may be attached to the message and then extracted and generated on the receiving device. A telephone call may spawn a separate communication for the advertisement. The advertisement may include a personalization message to show that the advertisement originated from the user. This provides an endorsement for the advertisement, which may enhance the recipient's acceptance of the advertisement.

Advertisements may be provided to both the device sending the communication and the device receiving the communication. For the receiving device, the advertisement may be embedded in the communication, may be provided after the communication or may be provided through a separate message from a server. Different advertisements may be sent to either the user's device or the recipient's device depending on an activity state of the receiving (or sender's) device. Other factors may be evaluated to determine a what advertisement and what format of an advertisement that is to be sent. Exemplary factors include the frequency, type, and duration of communications sent and/ or received by a device. Other factors include the location, time, day and a current activity context of the device.

In one embodiment, advertisements are provided to devices through a network. The advertisements are processed by an application or module provided in software, firmware or hardware on an advertisement server in the network. Alternatively, the advertisements may be stored and processed in the devices. Additionally, aspects of the application and module can be split between the devices and one or more servers.

Now, a description is provided of a network and exemplary communication devices that have access to servers in the network, including an advertisement server, according to an embodiment. Thereafter, specific features of an embodiment are discussed.

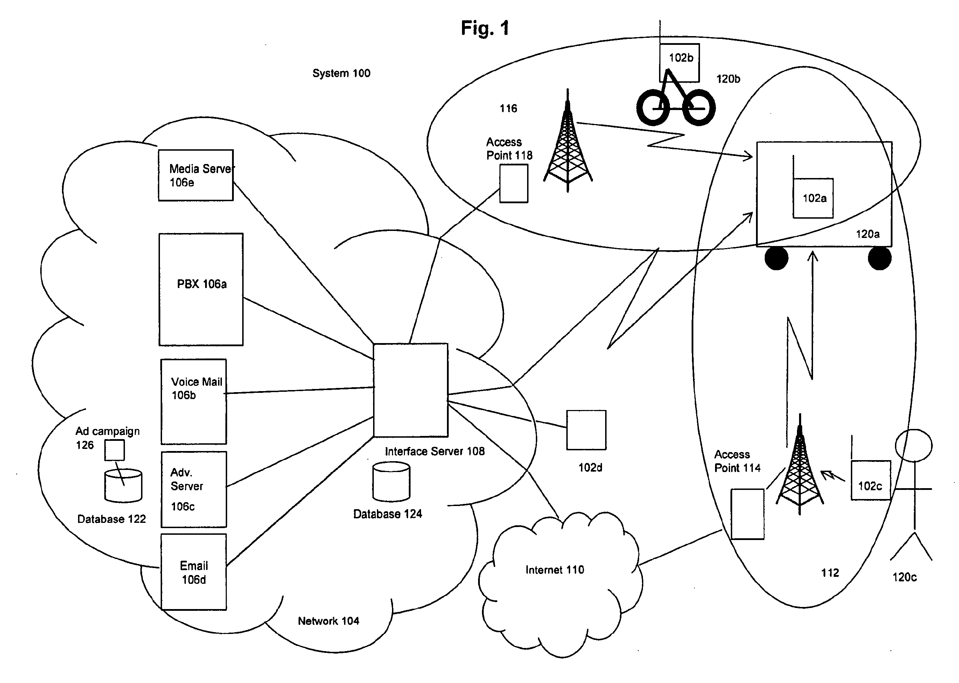

Referring to Fig. 1, system 100 shows device 102a in communication with network 104. Device 102a is a communication device having one or both data and voice communication capabilities; it may be a multiple-mode device capable of voice, data and other types of communications. Device 102a may be a wireless handheld device, cell phone, smart phone, personal digital assistant (PDA), and/or computer (either desktop or portable) having a (wireless) network card, network adapter and/or network interface controller (NIC) installed therein.

Device 102a may include a short-range communication sub-system that enables communication between device 102a and other proximate systems or devices, which need not necessarily be similar devices. For example, the short-range communication sub-system may include an infrared device and associated circuits and components, or a Bluetooth (trade-mark) communication module to provide for communication with similarly enabled systems.

Device 102a may further include a movement detection module (described later), which may be used to determine speed and acceleration of device 102a. Device 102a may also have a global positioning system (GPS) module (described later) that receives signals from one or more satellites, thereby allowing a location of the device to be calculated using triangulation techniques.

Device 102a may have radio frequency identification (RFID) capabilities, and thus device 102a may include an RFID transponder and / or an RFID reader. RFID uses radio waves to automatically identify objects, which may be done in several ways. An exemplary identification technique stores identification data, which may include a serial number, that identifies device 102a on a storage device, such as a microchip, that is in communication with the RFID transponder inside device 102a. An RFID reader enables an RFID transponder that is within the RFID reader's range to transmit the stored identification data to the RFID reader. The range of an RFID reader may depend on its power output and the radio frequency used. The RFID reader may receive and convert the radio waves transmitted by the RFID transponder into digital information which may then be processed by a processor on device 102a or a related server.

Other devices 102 (notably devices 102b, 102c and 102d) may have any or all of the features of device 102a.

Returning to Fig. 1, device 102a is shown in system 100 as communicating with several networks, each of which may be implemented in any known network architecture topology. Exemplary networks are described below.

Network 104 provides a suite of applications, services and data to its connected devices (e.g., device 102a) through its associated servers 106a, 106b, 106c (collectively "application servers 106"). Interface server 108 is provided as one common collection and communication point for application servers 106 to components outside of network 104. Devices (such as device 102a) connect to network 104 through wireless connections or through an external connection through Internet 110.

Wireless network 112 provides a communication link for device 102a to network 104. Network 112 also provides communications between device 102a and device 102c. Wireless network 112 may be a data-centric network, a voice-centric network, or a dual-mode network. In one embodiment, wireless network 112 is implemented as a Wi-Fi network generally following standards set by the IEEE LAN/MAN Standards Committee, known as IEEE 802, through its working group "11". The 802.11 standard defines media access control (MAC) and physical (PHY) layers in the Open Systems Interconnection (OSI) protocol model for WLAN. Wireless network 112 includes an antenna and supporting radio transmission equipment known to those skilled in the art. Access point (AP) 114 is shown in network 104 and in an embodiment AP 114 is an IEEE 802.11 radio receiver/transmitter (or transceiver) and functions as a bridge between network 112 and network 104.

Cellular network 116 provides device 102a with another communication network allowing it to communicate with network 104. The coverage area of network 116 may overlap with the coverage areas of network 112. Cellular network 116 provides voice and data services to devices 102. Data-centric technologies for cellular network 116 include the Mobitex (trademark) Radio Network ("Mobitex") and the DataTAC (trademark) Radio Network ("DataTAC"). Voice-centric technologies for cellular network 116 include Personal Communication Systems (PCS) networks like Global System for Mobile Communications (GSM) and Time Division Multiple Access (TDMA) systems. Certain networks provide multiple systems. For example, dual-mode wireless networks include Code Division Multiple Access (CDMA) networks, General Packet Radio Service (GPRS) networks, and so-called third-generation (3G) networks, such as Enhanced Data rates for Global Evolution (EDGE) and Universal Mobile Telecommunications Systems (UMTS). Other network communication technologies that may be employed include, for example, Ultra Mobile Broadband (UMB), Evolution-Data Optimized (EV-DO), High Speed Packet Access (HSPA), Evolved High Speed Packet Access (HSPA+), etc. Access point 118 may provide an interface communication point between network 116 and network 104.

As noted an embodiment provides tailored communications to devices 102 that are part of a predetermined group that have overlapping interests (or attributes or setting) with comparable parameters for an advertisement campaign. As an example, exemplary devices 102 are shown in three different environments in Fig. 1, which may be used, in part, to determine whether their interests/settings/ parameters overlap with comparable interests/settings/parameters of other devices 102. Each environment is discussed in turn.

First, device 102a is shown as being located in vehicle 120a. As such, the user of device 120a is either the driver of vehicle 120a or a passenger. Vehicle 120a as car in its normal operation drives in urban or non-urban environments, such as on defined roads and highways, in forests etc. On the determination that device 120a is in vehicle 120a, this environment provides one context for advertisements for device 102a. On the determination that device 102a is in vehicle 120a, this environment provides a further context for advertisements for device 102a depending on whether the device is associated with a driver or a passenger (and which passenger) of vehicle 120a. Other passengers in vehicle 120a may also have devices 102 (not shown) etc. Contexts of "friends" may be made among occupants (driver and sets of passengers) in a vehicle. An embodiment may distinguish between deemed passengers in a vehicle and a driver of the vehicle. In some advertisement campaigns, passengers in a vehicle may be a preferred target audience than the driver, as passengers may have more time and less distractions to receive and review advertisements. As such vehicle 120 (which may be a car, train, plane, boat, etc.) may have a collection of devices 102 therein. In such an environment it has heretofore not been technically possible to actively ascertain the availability of a mobile telecommunication device to receive data items, specifically where a plurality of mobile telecommunication devices are provided in a specific geographic location and is it desired to distinguish between the plurality to select a subset of the plurality for transmission of data items. In accordance with the present teaching by interrogating identifiable attributes of the mobile device prior to transmission of the data items it is possible to select whether it is appropriate to transmit a data message to specific ones of a plurality of available mobile devices.

Second, system 100 shows device 102b that is located on bicycle 120b. As such, the user of device 102b is typically the operator of bicycle 120b (although on a tandem bicycle, the user may be a passenger). Bicycle 120b, in its normal use, is pedalled in urban and non-urban environments, such as on defined roads, on trails and in fields. On the determination that device 102b is with bicycle 120b, this environment provides another context for advertisements for device 102b. In this way it will be appreciated that the present teaching allows for defining geographic or other contextual parameters of the device without requiring user interaction so as to remotely filter messages for delivery to that user.

Third, system 100 shows device 102c as being carried by user 120c. User 120c may be walking, jogging, standing, sitting at a desk, eating in a restaurant, exercising at a gym, at home watching television, etc. On the determination that device 102c is with user 120c, this environment provides yet another context for advertisements for device 102c. User 120c may be walking with another user, having a separate device 102 (not shown).

Device 102d is a laptop computer communicating directly with network 104. Notably, location and speed data for device 102 may be determined based on the received location signals, such as those from a GPS module, using methods and applications known in the art.

Turning to network 104, further detail is provided on exemplary application servers 106 therein. Each server may communicate directly with elements communicating within network 104 (such as device 102 and other application servers 106).

Private Branch Exchange (PBX) server 106a provides a messaging client allowing device 102 to establish local voice and data transmissions within network 104 and with exterior devices and networks. PBX server 106a provides a connection with a PSTN (not shown) for routing incoming and outgoing voice calls for network 104 and its associated enterprise. On one side, PBX server 106a is connected to an external telephone system, such as the PSTN, via direct inward dialling (DID) trunks. In an embodiment, PBX server 106a may use ISDN signalling protocols for establishing and breaking circuit-switched connections through the PSTN and related signalling and communications.

Voice mail server 106b provides storage, retrieval and processing of voice mail data files which may be processed by PBX server 106a or a VoIP (Voice over Internet) system (not shown) associated with network 104. Voice mail server 106b may also notify the user when a voice mail message is left in his mailbox.

Media (or advertisement) server 106c provides storage and forwarding of advertisements to devices and / or servers in network 104. The advertisements, in one example, are received from one or more advertising networks (not shown) in communication with the advertisement server 106c. Advertisement server 106c provides a platform that gathers environment data from devices 102, such as data on the current motion of devices 102, and selectively identifies and distributes forms of advertisement to devices 102 and / or servers in network 104. Database 122 may be associated with server 106c and may contain advertisements and data relating to advertising campaigns 126 that are to be selectively distributed to devices 102.

Email server 106d provides storage, retrieval and processing of emails, SMS, MMS and other data files which may be processed by network 104. Other application servers 106 may be provided (e.g. video streaming servers, etc.).

As a common point of interface between elements in network 104 and communicating elements, such as device 102, interface server 108 is provided that communicates within network 104 with each application server 106 and provides a "gateway" interface connection to external entities, such as device 102, network 116 and network 112. In one embodiment, all communications between device 102 and application servers 106 are processed through interface server 108. Each application server 106 may have an independent connection to the external entities as well. Database 124 is associated with interface server 108 and may contain configuration data for devices 102 and application servers 106, allowing communications to be conducted through application server 106. It will be appreciated that in some configurations, interface server 108 is provided as a logical entity that may contain several modules responsible for various aspects of the interface with the devices 102, such as email processing, web browsing processing, advertising, attachment serving, etc.

With components of an exemplary network identified, further detail is provided on notable features of embodiments.

As noted earlier, when a first device is communicating with a second device, provides an embodiment provides a facility for providing an advertisement to either or both of the first and second devices. For the purposes of consistency for the specification, the term "first device" will generally refer to a device that is initiating or sending a communication, unless otherwise noted. As such, a "first device" will be understood to be equivalent to a "sending device", "initiating device", "sender", "sending party", "transmitter" or comparable terms. Also, the term "second device" will generally refer to a device that is receiving a communication, unless otherwise noted. As such, a "second device" will be understood to be equivalent to a "receiving device", "receiving party", "receiver", "recipient" or comparable terms. If no qualifier is provided for when the term "device" or "user" is provided, then it will be understood that the term can refer to either or both of a sending device and a receiving device. The identification of a device as being a sending device or a receiving device may switch depending on the current context of the communication (e.g. if the communication is an originating communication, if it is a forwarded communication or if it is a reply to a received communication).

An embodiment may consider the form and communication history of the present communication between the first and second devices when identifying an advertisement to send. The communication may be provided through various communication systems (e.g. cellular calls, voicemail messages, emails, text messaging, instant messaging, telephone calls etc.). The first device may have been communicating with one or more devices. Communications may be initiated in one format (e.g. email) and continued in another format (e.g. text messaging). It is not required that the devices be communicating with each other. Communications may have occurred in the past.

An embodiment provides selection process for identifying an advertisement that is to be sent. When an advertisement is to be provided to the second device, an analysis may be conducted to determine attributes of one or more of the devices. The attributes can be used to identify a relevant advertisement to be sent to the second device. Attributes may be identified from any data associated with either the first device, the second device or other devices. Attributes may be determined from setting and parameters associated with a device or its user, such as network connection parameters , time zone settings, owner identification data, current date, current season, current time, current location, calendar settings etc. Other external sources may provide attributes for a user of a device. For example, a social group network site, such as Facebook (trade-mark) or Twitter (trade-mark) may provide contexts and / or attributes for a user. Various combinations and weightings individual of the attributes may be used to determine an attribute value for a user. In an embodiment, groups may be identified through data and applications operating on the device as well as through third party application program interfaces (APIs). For example, contacts within a local address book application may be prioritized higher than a contact within an Instant Messaging client, which in turn may be prioritized higher than that provided by a wider third party social networking application like Facebook (trade-mark).

One embodiment considers only the attributes of the first device. Another embodiment considers only the attributes of the second device. Another embodiment considers the attributes of both devices.

Once a set of attributes of the device(s) has been determined, the attributes are compared against attributes of various advertisement campaigns and a set of campaigns are selected that match the attributes of the device(s). A preview of advertisements related to the campaigns in the set may be provided to the first device. The first device may select the advertisement to provide to the second device.

Once a particular advertisement campaign has been identified, an embodiment may then attempt to identify further characteristics of the device(s) or their user(s) to identify a format of an advertisement in the selected campaign that can be sent to the device(s). The refinement analysis may be conducted from any criteria, such as analyzing any recent activities of the device(s), analyzing preferences associated with the device(s), analyzing location and / or movement data associated with the device(s) and analyzing current status data of the device(s). Other criteria may be evaluated.

It will be appreciated that the above noted aspects of an embodiment may be conducted in different stages. For example, first an advertisement campaign may be identified and then set(s) of active devices may be identified.

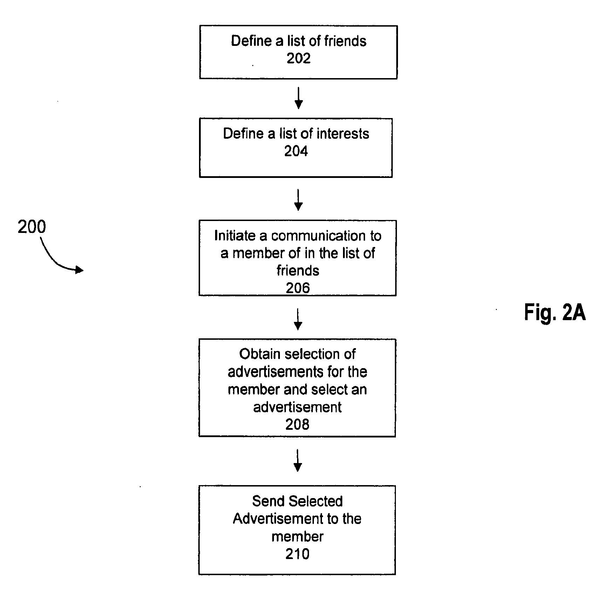

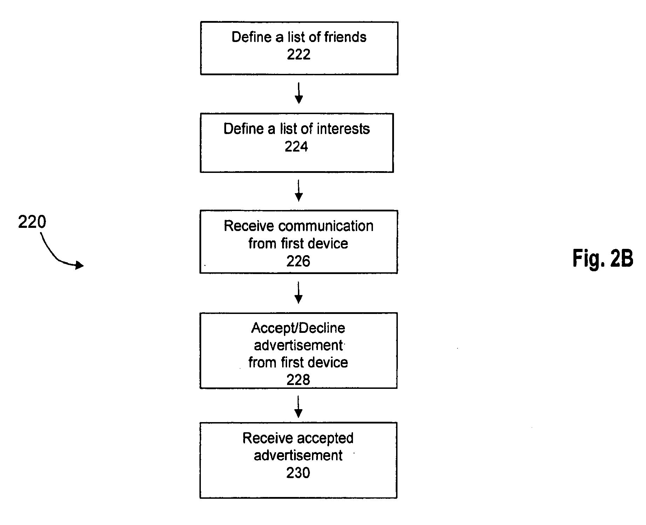

Further detail is provided on an exemplary "push"-based advertisement distribution system of an embodiment. Processes for a push-based embodiment for the first and second devices are provided in Figs. 2A and 2B.

First, Fig. 2A, illustrates an exemplary flow chart for processes conducted by a first device that is sending a communication to a second device. Therein, flow chart 200 provides an exemplary set of processes that are executed on a first device (such as device 102a) as it initiates a communication with a second device (such as device 102b).

As a background or initial process for device 102a, a list of contacts, friends, etc. is created in block 202. The list may be stored in device 102a. The list may include contacts associated with its communication modules, address book application and other sources. This list of friends provides a list of contacts that can be reviewed by applications and modules in an embodiment to identify additional contact information about a communication that device 102a is composing or has sent. This list may pre-exist and may be available to any element in the network.

Also, an initial process for device 102a, a list of interests or attributes may be created in block 204. The list may be stored in device 102a. The list may include interests/preferences/status data that is associated with device 102a and / or its user. The sources for the attributes may be settings stored in device 102a relating to its applications. Additional attributes may be derived from external sources, such as social networking sites associated with a user of device 102a. This list of attributes provides characteristics that can be used to identify set of advertisements to be distributed by an embodiment. This list may pre-exist and may be available to any element in the network.

At block 206 a communication is initiated by device 102a to device 102b. The communication may be any form of communication processed by the two devices, e.g. email, text message, telephone call, etc. The communication may be an originating communication or may be a continuation of an existing communication thread (for which prior communications may or may not have used the same communication mode). Upon the initiation of the communication, device 102a may send a message to advertisement server 106c (Fig. 1) indicating that the communication has been initiated. Then server 106c may be able to initiate an analysis to identify potential advertisements from campaigns to send to device 102a (as sender of the communication) and / or 102b (as recipient).

The interests for the communication may be constrained to specific interests, attributes, parameters and settings. Interests and attributes can cover any topic, such as hobbies, recently read items, favourites, etc. Such attributes may also be locally stored on the device. Parameters and settings may be stored in the devices or may be derived from data received from the devices (e.g. location information, movement information, network connection information, etc). Attributes may also be identified by examining interests captured in social networking websites (e.g. Facebook settings). Interests may also be determined through analysis of third party application usage, browsing history, content scanning of email and/or Instant Messaging content, as well as content interests trends from a user's social networks. For example having many friends that express an interest in boating and luxury cars may lead to a determination that the user is likely to have similar interests.

At block 208, using attributes associated with device 102a, such as the list of interests provided in block 204, a selection of advertisements that match with one or more of the items in the list of interests is provided to device 102a. Alternatively or additionally, attributes from other sources may be considered, such as attributes from device 102b (as recipient). A weighting and scoring algorithm may be provided to identify advertisements to provide to device 102a. The advertisements may have been preloaded or previously provided to device 102a, which form part of a group of advertisements to consider. Alternatively, one or more advertisements may be provided to device 102a when an analysis is complete. Previews of the selected advertisements may be provided to device 102a. The previews may consists of a smaller version of an advertisement that can be quickly viewed. A preview may be a text message. A graphical user interface (GUI) window may be provided on device 102a that identifies the selected advertisements and provides a brief summary or preview of same. The GUI allows the user of device 102a to select a final advertisement to be provided to device 102a and / or 102b. Once a selection is made, a message may be sent to advertisement server 106c to provide the full advertisement to the intended recipient(s).

For block 210, an embodiment may have advertisement server 106c responsible for providing the selected advertisement to device 102a (and others). Server 106c may provide the advertisement to device 102a for forwarding to other devices or it may provide the advertisement directly to the other devices. When the advertisement is provided to device 102a and the advertisement is meant for the recipient of the communication from device 102a, then device 102a may incorporate the advertisement into the communication (such as an email) or may send a supplementary communication to the recipient containing the advertisement. The supplementary communication may be in the same format as the original communication or a different format (e.g. email or text message only). It may be in a different format.

After the advertisement has been either previewed, selected or sent, device 102a may send a further message to server 106c indicating same. This message may be used to track how many advertisements have been processed by device 102a. This may assist in tracking advertisement accounts for device 102a, which can be used to change a status of an account for device 102a. For example, after a certain number of advertisements are processed, a usage rate for device 102a may be changed. Also after a higher threshold, then an embodiment may cease to provided advertisements to device 102a. Such account management tracking may be done on an absolute time basis or on a repeating cycle basis. For example, each month, an advertising account for device 102a requires that 50 advertisements be sent before a reduction in a usage rate is applied. Once 100 advertisements are sent, the usage rate is zero. It will be appreciated that other account parameters may be established based on a combination of parameters, such as the source of the advertisements, the destination of the advertisements, the size of the advertisements or the attributes, etc.

Next Fig. 2B, illustrates an exemplary flow chart for processes conducted by the second device that is receiving a communication from the first device. Therein, flow chart 220 provides an exemplary set of processes that are executed on the second device (such as device 102b).

As a background or initial process for device 102b, a list of contacts, friends, etc. is created in block 222. The list may be stored in device 102b. The list may include contacts associated with its communication modules, address book application and other sources. This list of friends provides a list of contacts that can be reviewed by applications and modules in an embodiment to identify additional contact information about a communication that device 102b is composing or has sent. This list may include settings regarding the permission or restriction of advertisements to be received from members in the list. If advertisements are allowed, then certain restrictions may be imposed on the types of advertisements provided relating to the type, source, subject, etc. of the advertisement (e.g. text only advertisements, no audio advertisements, all real estate advertisements allowed, no advertisements during the day, etc.) This list may pre-exist and be available to an embodiment.

Also, an initial process for device 102b, a list of interests or attributes may be created in block 224. The list may be stored in device 102b. The list may be comparable to the list of attributes provided for device 102a in block 204. Parameters for any restrictions on advertisements, as described for block 222 may be included in the attributes. This list may pre-exist and be available to an embodiment.

At block 226, device 102b receives a communication from device 102a. The communication may be the original communication created by device 102a in block 206. At this time, the advertisement has already been selected externally (either by device 102 or another source). Alternatively, the communication may be a separate communication containing the advertisement, separate from the original communication. The advertisement may be embedded in the communication or may be provided as a web site link. A preview of the advertisement may be provided.

At block 228, device 102b is provided with a facility to accept or reject the advertisement. The accept/reject analysis may be conducted using the attribute list and /or the contact list for device 102b. The communication may contain an indicator that an advertisement is or is not attached and details of same. The indicator can be used by device 102b to automatically determine whether to accept or reject the advertisement. Alternatively a GUI message may be generated on the display of device 102b to allow its user to manually accept or reject the advertisement. The GUI may provide a preview of the advertisement.

At block 230, if device 102b has accepted the advertisement, then it is generated on device 102b. If the advertisement has been embedded in a communication, then device 102b extracts same and generates it on its output devices. If device 102b has rejected the advertisement, then the advertisement is not accessed when it has been embedded in the communication. If the advertisement has been sent in a separate communication, the communication may be rejected by device 102b, ignored or deleted.

The processes described for Figs. 2A and 2B may be done on a peer-to-peer basis between devices 102a and 102b or it may be conducted from a central element, such as through server 106c. It will be appreciated that in other embodiments, one or more of processes may be performed by applications that are remote to device 102 or on device 102.

When identifying an advertisement to be provided, an embodiment may also select an appropriate format of an advertisement and for devices 102 that are to receive advertisements. Thereafter, applications operating on devices 102 then generate the format of the advertisement on devices 102. Advertisement data may be provided as one of, or a combination of, the following data formats: video (e.g. .mpg, .avi, .flv, .rm, .wmv, etc.), image (e.g. .jpg, .tif, .gif, etc.), audio (e.g..mp3, .ra, .wav, .wma, etc.), html, flash, etc.

The history/format/frequency/duration of communications between communicating devices may be considered when determining whether to send an advertisement and how to send an advertisement. For example, consider devices 102a and 102b that were communicating via a telephone call and an email. A typical telephone call may not have the facility to embed an advertisement to it. However, one embodiment appends to the end of a call a voice message relating to an advertisement. An Integrated Digital Services Network (IDSN) based call may allow advertisement data to be provided on a separate data channel for a voice call. If an advertisement is to be provided for a telephone call, it may be provided in a separate communication (such as an email or text message) from device 102a to 102b after or during the call. Device 102a or server 106c may create and send the separate communication. For an email, an advertisement may be appended to the message transmitted or a separate communication may be sent after or while the original message is sent.

Also, a particular format of an advertisement may be provided to each of devices 102a and 102b.

If a detected activity context changes for device 102 changes while an advertisement is generated on device 102, a further update message may be sent from device 102 to server 106c and subsequently, server 106c may send a command to stop sending or generating the advertisement or replace the advertisement with another one. Alternatively, the original advertisement provided to device 102 may have a conditional trigger condition flag that is used to determine whether the advertisement is generated on device 102. Device 102 may check the status of the flag and/or cause it to be updated depending on the current detected conditions of device 102. If the activity context changes an alternative advertisement format may be used.

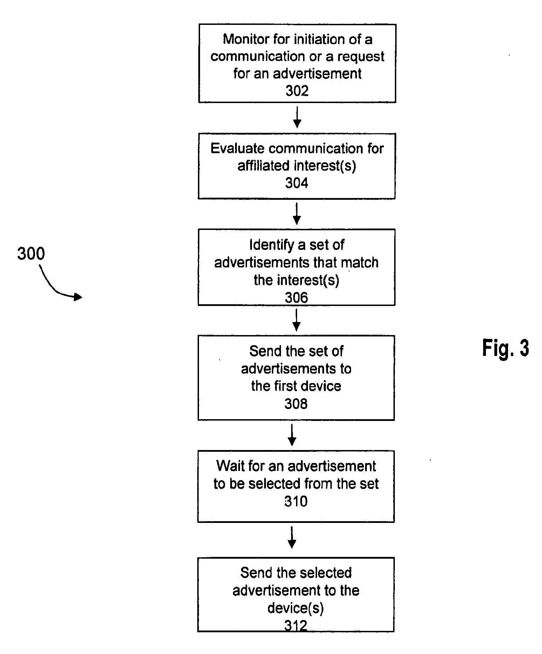

Turning now to Fig. 3, flow chart 300 provides an exemplary progression of processes that advertisement server 106c determine how to identify an advertisement to send to device(s).

First, at block 302, server 106c monitors for a notification that a device (e.g. device 102a) is initiating a communication to another device. This may be provided as a message from the originating device or from a server that is processing the communication.

Next at block 304, server 106c identifies the sending device and if possible the receiving device of the communication and analyses attributes relating to either or both of the devices against attributes of the entire set of advertisement campaigns. The attribute data provided by the sending and receiving devices may be requested and analyzed or separate attribute data may be collected and analysed.

At block 306, server 106c completes its analysis and identifies a set of advertisements that match the attributes to one or both of devices 102a and 102b. As part of providing the identification process, server 106c may attempt to identify match the provided attribute data of the devices against listed attributes of the advertisement campaigns.

An attribute for a device 102 may also be related to an activity context for the device. One context is based on a current state or location of the device. For example, if there is a connection between device 102a and vehicle 120a, then device 102a may output the audio component of an advertisement through speakers of vehicle 120a. In another embodiment, when device 102 is located in vehicle 120a a determination may be made as to whether device 102a is associated with a driver of vehicle 120a or a passenger in the vehicle. The determination may be made by analyzing whether a Bluetooth (trade-mark) connection has been made between electronics in vehicle 120a and device 102a. Alternatively, a software setting may be provided and set to indicate whether device 102a is associated with the driver or a passenger. Accordingly, when an advertisement is provided to device 102a, if device 102a is associated with the driver one format of an advertisement may be provided (e.g. audio only) and if device 102a is associated with a passenger, then another format of the advertisement may be provided (e.g. video with a map and audio). As such, there is a coordination of forms of advertisements provided to the devices 102a in vehicle 120a.

Another activity context may be inferred based on a determined location of a device. The location for a device may be determined using signals from its movement detection module, signals from its global positioning system (GPS), and strength signals of cellular network signals received by device 102, satellite feeds etc. Additionally, device 102 may be connected to vehicle 120 via wire or wireless connection, such as Bluetooth (trade-mark), and device 102 may provide activity/movement information from the vehicle.

Any or all of the attribute and activity data may be used to match against attributes of the stored advertisements for campaigns. From the analysis a set of best matching campaigns may be identified.

At block 308, server 106c sends the set of advertisements (or previews of the advertisements) to either or both of device 102a and 102b.

At block 310 server 106c waits for a response from either or both of device 102a and 102b in regards to a selection of an advertisement.

At block 312 server 106c with receipt of the selected advertisement, the selected advertisement is sent to either or both of devices 102a and 102b. Different formats of the advertisement may be provided, depending on a current activity context of the device 102 receiving the advertisement. Further details on advertisement formats is provided below.

As a summary, notable activities in flow chart 300 are as follows:
- Determine when a first device is communicating with a second device.
- Identify related attributes for one or more of the devices.
- Optionally, gather additional context data from one or more of the devices. The additional data may indicate movement, location and / or status of the devices.
- For the devices, analyze their attributes against attributes of provided advertisement campaigns. Select campaign(s) that match the attribute. Select appropriate format(s) for the advertisements from the campaign(s) for the devices, based on the additional data. Provide appropriately selected formats of advertisements to the devices.
It will be appreciated that other processes may be provided in flow chart 300.

It will be appreciated that in other embodiments, one or more of the processes of Fig. 3 may be performed by applications that are remote to server 106c. For example, attribute may be performed on a given device 102 and then device 102 may simply provide a message to server 106c indicating its attributes.

Other algorithms may be implemented to match an advertisement to a communication. One algorithm analyzes a particular communication and then further analyzes aspects of the sender and recipient to identify matching attributes. Therein, when a communication is initiated by a device, a record of the communication may be sent or analyzed by server 106c to identify the recipient(s) and any contexts for the communication. If the communication is an email or text message, a context may be determined from the subject line or the contents of the message. As the sending device is known, the interests of the sending party can then be determined. This may be determined by examining any associated social network parameters, and / or any settings or preferences associated with the device or its applications. Next, for each recipient of the communication, a related attribute analysis may be conducted. Where interests/preferences/settings of a receiving device match the sending device, server 106c may then initiate a query to find any advertisements in a database of advertisements for campaigns that match the interest/preference/setting.

Now, further detail is provided on formats of advertisements. Server 106c may have an associated database 122 that stores advertisements and formats. Table A below provides an exemplary matrix of advertisement formats and conditions on which a particular format /advertisement is to be sent to a particular device 102. A given format for an advertisement may be composed of one or more different audio/visual components. An audio component may be a voice and / or music generated on a speaker of device 102. A visual component may be a static image, a video, a banner, text or any graphical element generated on a display of device 102.

**Table A**

| Advertisement | Activity Context of Device 102 | | | | |
|---|---|---|---|---|---|
| | Driving | Passenger in Car | Walking | At Meeting | Leisure Time |
| Advertisement 1 | Audio only | Audio + Visual | Audio + Visual | SMS only | none |
| Advertisement 2 | Audio #1 only | Audio #2 only | Audio #2 only | Video only | none |
| Advertisement 3 | Audio only | Visual #1 | Audio + Visual | Audio + Visual | Audio + Visual |
| Advertisement 4 | Email only | Audio only | Audio + Visual | Visual only | Email only |
| Advertisement 5 | SMS message only | SMS + Visual | Audio + Visual | Audio + Visual | Audio + Visual |
| Advertisement 6 | none | Audio + Visual | Audio + Visual | Audio + Visual | none |
| Advertisement 7 | voice mail | Visual only | Audio + Visual | email only | none |
| Advertisement 8 | none | none | Audio only | none | Audio + Visual |
| Advertisement 9 | Audio only | Audio only | Audio + Visual | Audio + Visual | Audio + Visual |
| Advertisement 10 | Audio + Visual #1 | Audio + Visual #2 | Audio + Visual #3 | | |
| Advertisement 11 | Audio only | Audio + Visual #2 | Visual only | none | none |
| Advertisement 12 | Audio + Visual | Audio + Visual | Audio only | | |

The data in Table A may be stored in database 122 and may be periodically updated. A corresponding list of attributes for each advertisement campaign may also be stored in database 122. This corresponding list can be compared against the deemed attributes of the group of devices 102 that were identified as communicating with each other in order to attempt to identify a suitable campaign that matches the attribute(s) of the devices.

In an embodiment, an analysis may be provided to identify a particular format of the advertisement, based on additional data providing contexts, interests, preferences or settings associated with the users of the devices or the devices themselves. The additional data may relate to settings provided from social network websites. The data may include any information, including activity logs, connection status information for connections to any other thing or network (e.g. vehicle 120, network 116 or another device 102 (not shown)), information regarding the location of device 102 (e.g. through GPS data, through analysis of connection data from networks, including cellular networks and IP addresses, etc.), information regarding availability (which may be derived from calendar data), preference settings for applications operating on device 102, etc. A context for a device or its user may be inferred from the additional data. For example, an activity state may be derived , such as: driving, passenger in car, walking, at meeting, at home, commuting, leisure time, shopping, etc. Additional time/day and location data may be analyzed. For example, if the time/day is a weekday, one context may be determined (e.g. at work). For example, if the time/day is a weekend, one context may be determined (e.g. at leisure). The day may also indicate a season (e.g. winter, spring, summer, fall). For example snowmobiling may be a deemed activity if the device is moving at a certain speed, the location is deemed to be in a field and the time is the winter.

The direction of movement of device 102 may also be used (e.g. north, south, east, west, etc.). This direction information may be used to filter advertisements (e.g. if travelling north, then only provide advertisements for proximate entities that are on the east side of the street being travelled on). Advertisement server 106c may also select advertisement content based on the preferences of the user of device 102. The preferences of the user may be derived from a number of sources, including the user's device settings and subscriptions (e.g. Really Simple Syndication, Rich Site Summary, etc.), and the user's event history stored on device 102. For example, the user's preferences may indicate an interest in sports and, based on this information, advertisement server 106c may choose to send advertisements relating to sporting goods, services and events to the user's device 102.

In yet another embodiment, advertisement server 106c may utilize peer-identification information from device 102. For example, for vehicle 120a, device 102a may be used by its driver. There may be multiple devices 102c, 102d, etc. also in vehicle 120a and device 102a may identify other nearby devices 102c, 102d, etc. by obtaining identification data from the nearby devices using RFID, Bluetooth (trade-mark) connection, or other communication links. Advertisement server 106c may request peer-identification from device 102a. The data provided by device 102a may serve as a sufficient indicator for advertisement server 106c of the movement of peer devices 102c, 102d, etc. This may be useful in a situation where the peer devices have no movement detection capabilities. Using the peer-identification data, advertisement server 106c may selectively transmit advertisement data to peer devices 102c, 102d, etc. In a further embodiment, advertisement server 106c may synchronize the transmission of advertisement data to a group of devices 102, 102c, 102d, etc. travelling in the same vehicle 120a, such that the devices in the group generate the same advertisement at the same time to their respective users. In this way the server has identified a priori to transmission of the data items a specific number of identifiable mobile devices for receipt of specific data items that may be considered common to each of the devices. This remote analysis of the attributes of the individual mobile devices prior to transmission of data items to those mobile devices allows a filtering at the server side of the data messages that are transmitted across the network. This reduces the number of data messages that are transmitted and also reduces the volume of traffic that the network needs to cater for. For a user of the device, this means that the volume or number of data items that they receive may be reduced and that each data item received is specifically targeted or appropriate for that user. This can reduce the user interaction time with their messaging utility operable on their mobile device. For the network operator, this may allow the provision of data services without significant increases in the processing requirements of the network. In a further embodiment, the synchronization of advertisement may differentiate between device 102a that belongs to the driver and the devices 102c, 102d of the passengers such that different formats of an advertisement are provided to the driver and the passengers. For example, the passenger devices may receive a format that includes a visual component of the advertisement, while the driver's device 102a would not receive the same visual component.

Status indicators may also be provided from settings stored in device 102 associated with a user's preferences. Such preferences can indicate any one or more of the following settings: current time zone, current home telephone number, preference for salutations (e.g. Ms./Mr., etc.), base font, base ring tone, base colour scheme for GUI, base communication enunciators, base communications preferences (e.g. Wi-Fi first, Wi-Fi only), etc. Any one or more of these indicators can be used to infer another state of mind for the user. Such preferences are typically provided in a user's GUI operating on device 102, allowing changes to be made thereto. An embodiment is provided with access to this data to perform a part of a state of mind analysis.

Additional status indicators may be provided from data from applications operating on device 102. For example, a calendar application (described later) may provide current location and status information about a user of device 102. Similarly a GPS application may provide current location information about device 102. Data from other applications may be used. The applications may operate remotely to device 102 yet still provide a status indicator relating to device 102.

It will be appreciated that one or more of the above noted analyses may be combined, and weighted as a more detailed analysis of the current state of mind of the user of device 102.

It will be appreciated that functions and operations described above for device 102 (and server 106c) in Figs. 2A, 2B and 3 may be reconfigured to be performed by its counterpart component (namely a function conducted by device 102 may be conducted on server 106c and vice versa) or on another component in system 100. Appropriate message and command structures may be provided to synchronize functions among the components.

In creating an advertisement format for distribution to device 102, server 106c may provide a command to another server to initiate a communication to device 102 that contains a message containing an advertisement destined for device 102. For example, if a format of an advertisement is as an email or voicemail, server 106c may send a command to server 106d or 106b to send a message containing text or a voice message containing the advertisement and request that server 106d or 106b send an appropriate message containing same to device 102.

It will be appreciated that in one embodiment, the advertisement server may provide these functions through software, hardware and / or firmware operating on or with its microprocessor. The interface server has a communication connection to the servers in the network; and a second communication link to the electronic device. The interface server may have a device communication module that, through instructions provided to the microprocessor, receives the request from the device for access to one or more services or servers; and generates and sends a response to the request for access to the device. The interface server may also have a server communication module to analyze a status of at least one capability of the electronic device; generate and send a set of access requests to a set of servers of the one or more services or servers that it can access; monitor for responses from the servers; extract access information from said the responses; and process the access information for the response for the device. The interface server produces the set of access requests from an analysis of said status of at the capabilities of the electronic device.

Once an analysis of the set of devices 102 has been identified, advertisement server 106c builds and sends individual advertisements to members in the set.

In another embodiment, a "pull"-based advertisement system may be provided. Therein, one or more aspects of the activity analysis and advertisement analysis may be provided in whole or in part on devices 102 and once the analysis is complete, devices 102 may send a request for an advertisement and / or a specific format of the advertisement from server 106c. The activity analysis may be conducted through sharing of current activity levels within the group members to identify devices that meet predetermined activity thresholds.

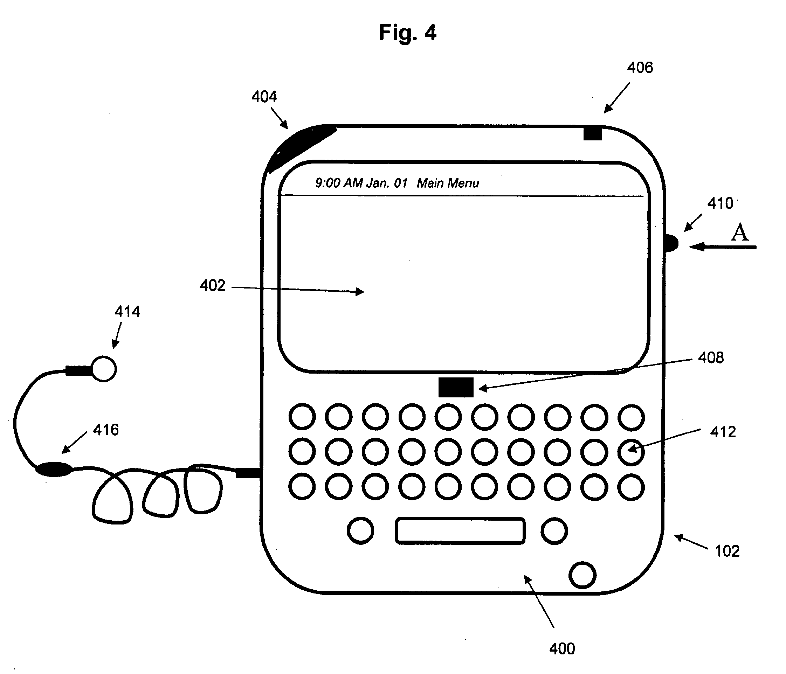

Further detail is now provided on components of device 102 that are related to processes relating to an embodiment. Referring to Fig. 4, electronic device 102 is based on a computing platform having functionality of an enhanced personal digital assistant with cellphone and e-mail features. It is, however, to be understood that electronic device 102 can be based on construction design and functionality of other electronic devices, such as smart telephones, desktop computers, pagers or laptops having telephony equipment. In a present embodiment, electronic device 102 includes a housing 400, an LCD 402, speaker 404, an LED indicator 406, touchpad 408, an ESC ("escape") key 410, keypad 412, a telephone headset comprised of an ear bud 414 and a microphone 416. Touchpad 408 and ESC key 410 can be inwardly depressed as a means to provide additional input to device 102. ESC key 410 may be depressed along the path of arrow "A". A trackball may be provided (not shown).

It will be understood that housing 400 can be made from any suitable material as will occur to those of skill in the art and may be suitably formed to house and hold all components of device 102.

Device 102 is operable to conduct wireless telephone calls, using any known wireless phone system such as a Global System for Mobile Communications (GSM) system, Code Division Multiple Access (CDMA) system, CDMA 2000 system, Cellular Digital Packet Data (CDPD) system and Time Division Multiple Access (TDMA) system. Other wireless phone systems can include Bluetooth (trade-mark) and the many forms of 802.11 wireless broadband, like 802.11a, 802.11b, 802.11g, etc. that support voice. Other embodiments include Voice over IP (VoIP) type streaming data communications that can simulate circuit-switched phone calls. Ear bud 414 can be used to listen to phone calls and other sound messages and microphone 416 can be used to speak into and input sound messages to device 102.

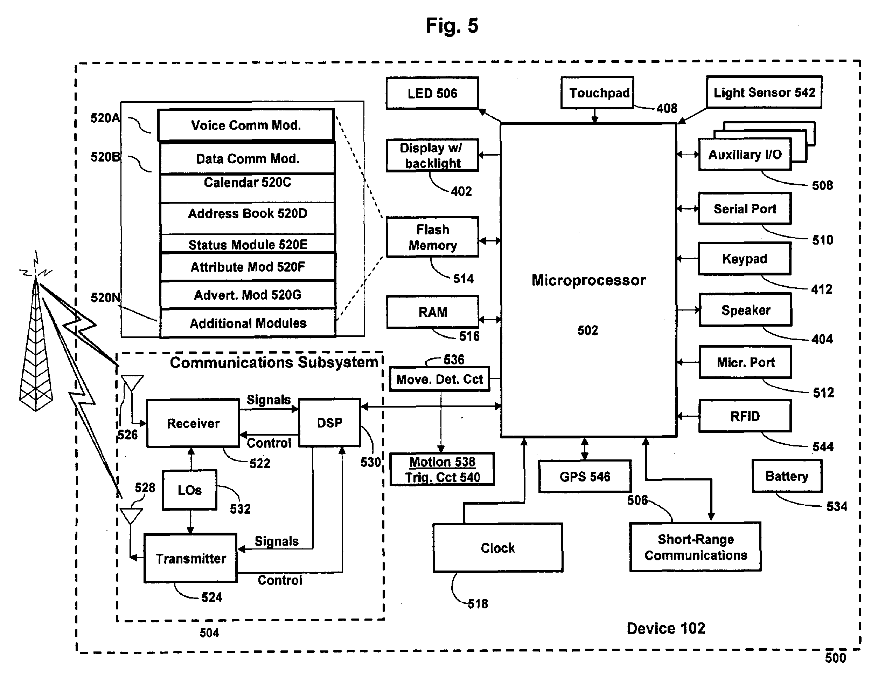

Referring to Fig. 5, functional components of device 102 are provided in schematic 500. The functional components are generally electronic, structural or electro-mechanical devices. In particular, microprocessor 502 is provided to control and receive almost all data, transmissions, inputs and outputs related to device 102. Microprocessor 502 is shown schematically as coupled to keypad 412 and other internal devices. Microprocessor 502 preferably controls the overall operation of the device 102 and its components. Exemplary microprocessors for microprocessor 502 include microprocessors in the Data 950 (trademark) series, the 6200 series and the PXA900 series, all available at one time from Intel Corporation. Microprocessor 502 is connected to other elements in device 102 through a series of electrical connections to its various input and output pins. Microprocessor 502 has an IRQ input line which allows it to receive signals from various devices. Appropriate interrupt firmware is provided which receives and reacts to the signals detected on the IRQ line.

In addition to the microprocessor 502, other internal devices of the device 102 are shown schematically in Fig. 5. These include: display 402; speaker 404; keypad 412; communication sub-system 504; short-range communication sub-system 506; auxiliary I/O devices 508; serial port 510; microphone port 512 for microphone 416; flash memory 514 (which provides persistent storage of data including local data relating to the status flags used by an embodiment); random access memory (RAM) 516; clock 518 and other device sub-systems (not shown). Device 102 is preferably a two-way radio frequency (RF) communication device having voice and data communication capabilities. In addition, device 102 preferably has the capability to communicate with other computer systems via the Internet. Device 102 may have a SIM card (not shown).

Operating system software executed by the microprocessor 502 is preferably stored in a computer-readable medium, such as flash memory 514, but may be stored in other types of memory devices, such as read-only memory (ROM) or similar storage element. In addition, system software, specific device applications, or parts thereof, may be temporarily loaded into a volatile store, such as RAM 516. Communication signals received by the mobile device may also be stored to RAM 516.

Microprocessor 502, in addition to its operating system functions, enables execution of software applications on device 102. A set of software (or firmware) applications, generally identified as applications 520, that control basic device operations, such as voice communication module 520A and data communication module 520B, may be installed on the device 102 during manufacture or downloaded thereafter. Calendar application 520C and address book application 520D provide useful tracking tools for the user of device 102. Data from the calendar application 520C may be used in an embodiment to determine a context for a state of movement for device 102. Status module 520E monitors and evaluates the status of various capabilities of device 102 (e.g. its communication connections, battery power, available memory) and updates data stored on device 102 with this information. Module 520E may also generate and send communications to external devices (such as interface server 108) regarding this information on a periodic basis or as statuses change. Attribute analysis module 520F analyzes interest and activity data for device 102. It receives data from settings and preferences provided from internal and external sources, such as social network sites and settings for applications operating on device 102. Module 520F may also analyze data from components of device 102, such as movement detection circuit 536, motion circuit 538 and trigger circuit 540, GPS module 645, RFID module 544, communication module 504, short-range communication sub-system 506, time and calendar data, etc. The data collectively can be used to determine whether device 102 is moving, the direction of movement, the speed of the movement, the location of device and what type of terrain the device is on (roads, railways, water, off-road, etc.). Override (hardware/software) data and switch settings may also be used to determine the interests and activity contexts of device 102. Module 520F may provide status messages to server 106c or other external devices, based on received requests or changes in activity and / or movement status. Module 520F may impose thresholds on the activity and / or movement data before sending such status messages. Module 520F may generate and send communications to external devices (such as interface server 108 or server 106c) regarding this data on a periodic basis, on a per-request basis, or as the device's activity and / or movement changes. Advertisement processing module 520G receives and extracts any components of advertisements provided to device 102 and provides the components to the proper output devices (e.g. display 402, speaker 404). Additionally, advertisement processing module 520G may initiate a further communication to another device containing the received advertisement. The mode of the further communication may be provided by any of the communication facilities provided on device 102 (e.g. email, text message, voice call, etc.). If a component of an advertisement is provided as an email, then data communication module 520B will process same. As well, additional software modules, such as software module 520N, which may be for instance a personal information manager (PIM) application, may be installed during manufacture or downloaded thereafter into device 102. Data associated with each application can be stored in flash memory 514.

Data communication module 520B may comprise processes that implement features, processes and applications for device 102 as provided and described earlier, allowing device 102 to generate track status of various components of device 102 and to generate and send messages to external devices (such as interface server 108).

Communication functions, including data and voice communications, are performed through the communication sub-system 504 and the short-range communication sub-system 506. Collectively, sub-systems 504 and 506 provide the signal-level interface for all communication technologies processed by device 102. Various applications 520 provide the operational controls to further process and log the communications. Communication sub-system 504 includes receiver 522, transmitter 524 and one or more antennas, illustrated as receive antenna 526 and transmit antenna 528. In addition, communication sub-system 504 also includes processing modules, such as digital signal processor (DSP) 530 and local oscillators (LOs) 532. The specific design and implementation of communication sub-system 504 is dependent upon the communication network in which device 102 is intended to operate. For example, communication sub-system 504 of device 102 may operate with the Mobitex (trade-mark), DataTAC (trade-mark) or General Packet Radio Service (GPRS) mobile data communication networks and also operate with any of a variety of voice communication networks, such as Advanced Mobile Phone Service (AMPS), Time Division Multiple Access (TDMA), Code Division Multiple Access (CDMA), CDMA 2000, Personal Communication Service (PCS), Global System for Mobile Communication (GSM), etc. Other types of data and voice (telephonic) networks, both separate and integrated, may also be utilized with device 102. In any event, communication sub-system 504 provides device 102 with the capability of communicating with other devices using various communication technologies, including instant messaging (IM) systems, text messaging (TM) systems and short message service (SMS) systems.

In addition to processing communication signals, DSP 530 provides control of receiver 522 and transmitter 524. For example, gains applied to communication signals in receiver 522 and transmitter 524 may be adaptively controlled through automatic gain-control algorithms implemented in DSP 530.

Short-range communication sub-system 506 enables communication between device 102 and other proximate systems or devices, which need not necessarily be similar devices. For example, the short-range communication sub-system may include an infrared device and associated circuits and components, or a Bluetooth (trade-mark) communication module to provide for communication with similarly enabled systems. Such short-range communications could be configured to selectively cascade data items received by a mobile device to other neighbouring devices in a virtual daisy-chain. By using these sub-systems which operate under different frequency ranges and/or are not utilising the mobile telecommunication network it is possible to reduce the bandwidth requirement within the mobile telecommunication network for distributing data items to a plurality of users.

Powering the entire electronics of the mobile handheld communication device is power source 534. In one embodiment, the power source 534 includes one or more batteries. In another embodiment, the power source 534 is a single battery pack, especially a rechargeable battery pack. A power switch (not shown) provides an "on/off" switch for device 102. A power source interface (not shown) may be provided in hardware, firmware, software or a combination of such elements to selectively control access of components in device 102 to power source 534. Upon activation of the power switch an application 520 is initiated to turn on device 102. Upon deactivation of the power switch, an application 520 is initiated to turn off device 102. Power to device 102 may also be controlled by other devices and by software applications 520. Other components in device 102 include light sensor 542. RFID module 544 may include an RFID transponder and / or an RFID reader.

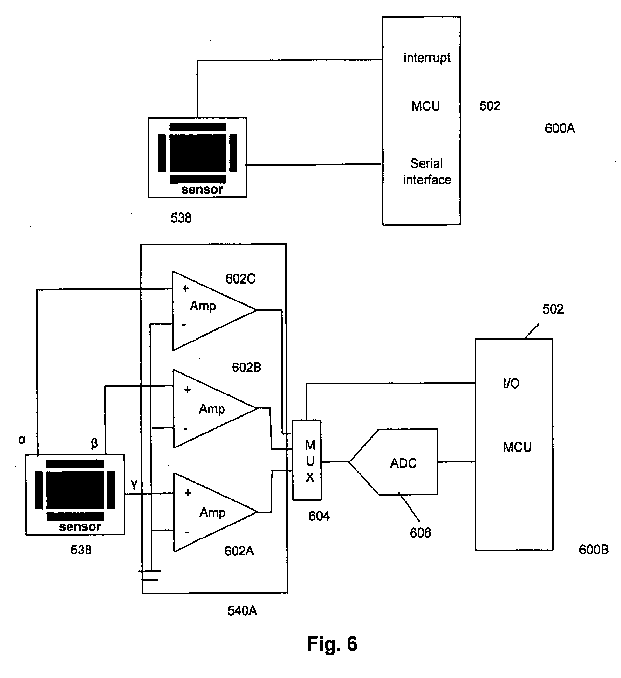

Referring to Fig. 6, with some algorithms of an embodiment described, further detail is provided on how aspects of the embodiment are implemented in device 102 through movement detection circuit 536 and its related components. Therein, two sensors arrangements for device 102 are shown. Circuit 600A shows sensor 538 directly connected to the interrupt and serial interface input lines of microprocessor 502. Accordingly, software operating on microprocessor 502 is provided to selectively monitor signal(s) from sensor 538 to determine when movement of device 102 has been detected. The circuit between sensor 538 and microprocessor 502 can be considered to be one version of circuit 536. Software operating on microprocessor 502 determines when a notable signal has been generated by sensor 238. Circuit 600B shows sensor 538 connected to trigger circuit 540A having two differential comparators 602A and 602B, which then have their outputs attached to an analog mux 604. The mux selectively provides its output according to a control signal generated by microprocessor 502. The analog output of mux 604 is converted to a set of digital signals by analog to digital converter 606, which then provides the output to microprocessor 502. As with other implementation, software operating on microprocessor 502 determines when a notable signal has been generated by sensor 538. Reading of positions determined by the software can be stored in memory 514 or 516. The software can also create an average reading of the movement readings. This average reading can be used to determine when device 102 is in a resting position or when it is effectively in a resting position (e.g. it is being moved only in inconsequential amounts).

For any embodiment, a low-g MEMS (micro-electromechanical system) accelerometer may be used for motion sensor 538. Further, the accelerometer may be of almost any type, including a capacitive, piezoelectric, piezoresistive, or a gas-based accelerometer. An exemplary low-g MEM accelerometer is a LIS302DL tri-axis digital accelerometer, available from STMicroelectronics of Geneva, Switzerland. Accelerometers sense and convert an acceleration detected from a motion (e.g. tilt, inertial, or vibration) or gravity into an electrical signal (producing a corresponding change in output) and are available in one, two or three axis configurations. Accelerometers may produce digital or analog output signals.

Since an accelerometer detects a change in velocity, in order to use an accelerometer to detect a certain speed, signals from an accelerometer may be used to detect velocity changes, which are then analyzed to determine whether an underlying given (average) speed is associated with the changes. In a moving vehicle, for example, as the device is moving, different accelerations may be detected as the vehicle speeds up (perhaps from a stop), slows down (perhaps to a stop) and turns corners during the driving. These velocity changes can be mapped against predetermined speed levels which then can be used to select given formats of advertisements.

To improve sensitivities of an accelerometer when it is used as motion sensor 538, its outputs can be calibrated to compensate for individual axis offset and sensitivity variations. Calibrations can also be performed at the system level, providing end-to-end calibration. Calibrations can also be performed by collecting a large set of measurements with the device in different orientations. It will be appreciated that other circuits using different combinations of sensors and triggering components and threshold detectors may be used to provide functionalities of sensor 538 and circuit 540.

In other embodiments, motion sensor 538 may be substituted or combined with a different device, such as a spring-loaded switch, a tilt switch, a gyroscope, a mercury switch, GPS module 546 or any other device which can generate a signal responsive to movement or change in orientation of device 102. It is preferable that the device have low quiescent power draw characteristics.

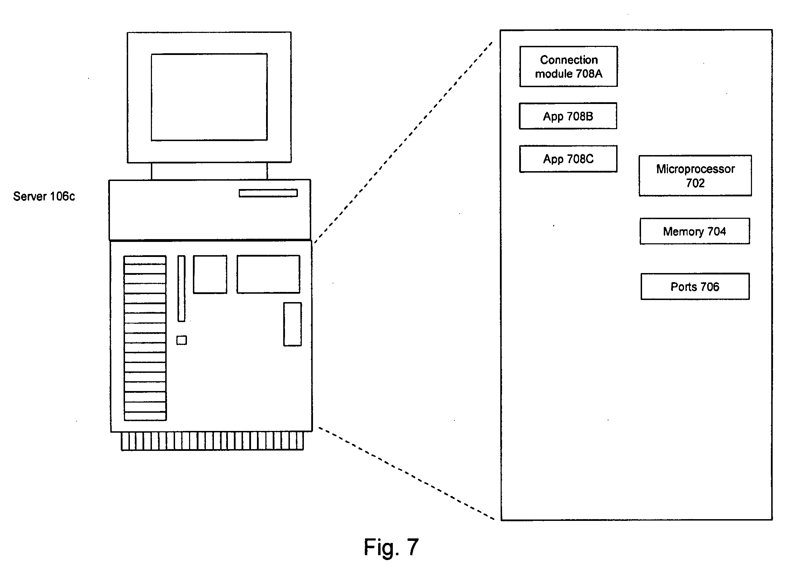

Now, further detail is provided on features of server 106c. Referring to Fig. 7, general features of server 106c for processing electronic communications in accordance with an embodiment are shown. In an embodiment, server 106c is based on a general purpose computing platform. It may have the form factor of a desktop or laptop computer. It may be a minicomputer. In a present embodiment, computer 106c includes main processing station 700. Internally, server 106c has microprocessor 702 and memory 704. Connection ports 706 provides one communication connection system to allow server 106c to connect to with network 104, providing access to device 102 and other devices. Applications 708 are software that execute on microprocessor 702 and may be stored in memory 704 as database 122. Database 122 may store advertisement data as well.

Applications 708 control basic operations of computer 116, including ports 706. Connection module 708A provides the connection-level communication between server 106c and other elements in network 104, such as interface server 108 to ultimately allow access to processing of emails, IMs, data and other data transmission through server 108. Interest/activity context analysis application 708B initiates requests data to identify attributes relating to devices 102 and to determine an activity context for devices 102. It will be appreciated that an interest and activity context analysis may be conducted by one or more applications in server 106c and device 102. When advertisements are selected by server 106c, device 102 may perform an attribute analysis or may provide relevant data (position, movement, near-future calendar entries, current communication links, etc.) to server 106c, wherein server 106c performs the analysis. Application 708B receives attribute and context data from devices 102 to determine advertisements to be sent to devices 102. Once attributes for the devices are determined, advertisement selection module 708C selects and sends a set of advertisement to devices 102 that match the attributes. A specific form of an advertisement may be provided, depending on activity contexts (e.g. per Table A). An advertisement may include preview data which provides a snapshot of the advertisement. The form and content of the preview data may be provided in any data format as previously described for an advertisement. Additionally, advertisements may be sent to device 102 depending on other scheduling and trigger conditions. For example, advertisements may be sent periodically to device 102 prior to receiving any communication notification. Application 708B may initiate a command destined for another application server 106 (such as email server 106d or voice mail server 106b) to send a message containing a provided advertisement to device 102. As such, applications 708A-C execute processes for server 106c as described in Fig. 3.

In another embodiment, devices in a network may periodically send data to advertisement server 106c identifying devices with which they communicating or have recently been communicating. Server 106c may use that data to determine the set of devices to send advertisements to and may also use that data as criteria to select appropriate advertisements.

The embodiments have been described for a system that provides an interface server to provide intermediary processing of communications between a device and servers in a network. It will be appreciated that embodiments may implement the features in any communication protocol or system. It will be appreciated that any features of interface server as described herein may be incorporated into a device or a component of another server in network 104.

It will be appreciated that the embodiments relating to devices, servers and systems may be implemented in a combination of electronic hardware, firmware and software. The firmware and software may be implemented as a series of processes, applications and/or modules that provide the functionalities described herein. The algorithms and processes described herein may be executed in different order(s). Interrupt routines may be used. Data may be stored in volatile and non-volatile devices described herein and may be updated by the hardware, firmware and/or software. Other network embodiments may use non-client server architectures for management of communications. It will be appreciated that a system and method in accordance with an embodiment can address a technical problem of how to provide common data items to a plurality of mobile telecommunication devices within a mobile telecommunication network through a push or pull mechanism. By selecting individual sets of two or more devices from the plurality of available devices operating within the network based on shared attributes between two or more communicating devices, an embodiment may enable the specific distribution of appropriate data items to those selected devices. This selective targeting of the devices and / or content may provide a reduction in the overall traffic within the network as it can obviate or reduce the need to push (or pull) data items to all devices operating in the network, rather data items are distributed to those devices whose attributes match a predefined attribute type. Furthermore, the matching of the nature of the data items that is sent to the attributes may further provide reduction in traffic within the network as the data items that are pushed (or pulled) are pre-filtered prior to their distribution to targeted mobile devices.

As used herein, the wording "and / or" is intended to represent an inclusive-or. That is, "X and / or Y" is intended to mean X or Y or both.

In this disclosure, where a threshold or measured value is provided as an approximate value (for example, when the threshold is qualified with the word "about"), a range of values will be understood to be valid for that value. For example, for a threshold stated as an approximate value, a range of about 25% larger and 25% smaller than the stated value may be used. Thresholds, values, measurements and dimensions of features are illustrative of embodiments and are not limiting unless noted. Further, as an example, a "sufficient" match with a given threshold may be a value that is within the provided threshold, having regard to the approximate value applicable to the threshold and the understood range of values (over and under) that may be applied for that threshold.

The present disclosure is defined by the claims appended hereto, with the foregoing description being merely illustrative of embodiments of the present disclosure. Those of ordinary skill may envisage certain modifications to the foregoing embodiments which, although not explicitly discussed herein, do not depart from the scope of the present disclosure, as defined by the appended claims.

## Claims

1. A method for distributing and tracking messages sent to a first device, said method comprising:
identifying a second device that is in communication with said first device;
identifying a first media that matches at least one attribute associated with at least one of said first and second devices (306);
transmitting said first media to said first device (308) from a server;
evaluating at said first device whether to accept said first media for generation as part of an output from said device;
if said first media is accepted by said first device, then providing a notification of acceptance of said first media from said first device to said server and then transmitting said first media to said second device (312) from said server; and
tracking a total number of media transmitted to said first device from said server over a defined period of time for an account associated with said first device.

2. The method for distributing and tracking messages sent to a first device as claimed in claim 1, wherein:
said at least one attribute is associated with said first device;
said first device is sending a communication to said second device; and
said first device provides said notification.

3. The method for distributing and tracking messages sent to a first device as claimed in claim 2, further comprising:
identifying a second media that matches said at least one attribute associated with said first device;
transmitting said second media to said first device with said first media; and
upon receipt of a notification of approval of said second media, transmitting said first media to said second device.

4. The method for distributing and tracking messages sent to a first device as claimed in claim 2, further comprising:
embedding said first media in said communication; and
transmitting said communication from said first device to said second device.

5. The method for distributing and tracking messages sent to a first device as claimed in claim 4, further comprising:
generating said first media on said second device when said second device has accepted said first media.

6. The method for distributing and tracking messages sent to a first device as claimed in claim 2, further comprising:
embedding said first media in a second communication; and
transmitting said second communication from said first device to said second device.

7. The method for distributing and tracking messages sent to a first device as claimed in claim 2, further comprising:
providing a preview of said first media to said first device.

8. The method for distributing and tracking messages sent to a first device as claimed in claim 3, wherein:
said first media and said second media are transmitted to said first device prior to said identifying that said first device is sending said communication to said second device.

9. The method for distributing and tracking messages sent to a first device as claimed in claim 3, further comprising:
providing previews of said first media and said second media to said first device in a graphical user interface (GUI),
wherein said GUI provides a selection interface for a user of said device to select either of said first media or said second media for transmission to said second device.

10. The method for distributing and tracking messages sent to a first device as claimed in claim 2, wherein said at least one attribute relates to a preference provided from a social network site relating to a user of said first device.

11. The method for distributing and tracking messages sent to a first device as claimed in claim 2, further comprising:
utilizing additional data relating to at least one of said first and second devices to determine an activity state for said at least one of said first and second devices; and
identifying a format of a first media based on said additional data, and/or
determine an activity state of said second device based on its location.

12. A server (106c) for distributing and tracking messages sent to a first device (102a), said server (106c) comprising:
an identification module to
identify a first device (102a) that is in communication with a second device (102b); and
identify a first media that matches at least one attribute associated with at least one of said first and second devices (102a, 102b);
an advertisement selection module to
transmit said first media to said first device (102a); and
upon receipt of a notification of approval of said first media, transmits said first media to said second device (102b),
wherein said server tracks a total number of media transmitted to said first device (102a) from said server over a defined period of time for an account associated with said first device (102a).

13. The server (106c) for distributing and tracking messages sent to a first device (102a) as claimed in claim 12, wherein:
said first device (102a) provides a communication to said second device (102b);
said at least one attribute is associated with said first device (102a);
said first device (102a) provides said notification;
said identification module further
identifies a second media that matches said at least one attribute associated with said first device (102a);
and
said advertisement selection module further
transmits said second media to said first device (102a) with said first media; and
upon receipt of a notification of approval of said second media, transmits said first media to said second device (102b).

14. The server for distributing and tracking messages sent to a first device (102a) as claimed in claim 12, wherein:
said advertisement selection module further transmits said first media and said second media to said first device (102a) prior to having said first device identify that it is sending said communication to said second device (102b).

15. The server for distributing and tracking messages sent to a first device (102a) as claimed in claim 12, wherein:
said advertisement selection module further provides previews of said first media and
said second media to said first device (102a) for display in a graphical user interface (GUI),
wherein said GUI provides a selection interface for a user of said device to select either of said first media or said second media for transmission to said second device (102b), and/or
said advertisement selection module further
utilizes additional data relating to at least one of said first and second devices to determine an activity state for said at least one of said first and second devices (102a, 102b); and
identifies a format of a first media based on said additional data, and/or
said advertisement selection module further
embeds said first media in said communication; and
transmits said communication from said first device (102a) to said second device (102b).

## Patentansprüche

1. Verfahren zur Verteilung und Nachverfolgung von zu einer ersten Vorrichtung gesendeten Mitteilungen, welches Verfahren enthält:
Identifizieren einer zweiten Vorrichtung, die in Kommunikation mit der ersten Vorrichtung steht;
Identifizieren eines ersten Mediums, das mit mindestens einem Attribut übereinstimmt, das mindestens einer der ersten und der zweiten Vorrichtung (306) zugehörig ist;
Übertragen des ersten Mediums zu der ersten Vorrichtung (308) von einem Server;
Bewerten an der ersten Vorrichtung, ob das erste Medium zur Erzeugung als Teil einer Ausgabe von der Vorrichtung akzeptiert werden soll;
wenn das erste Medium von der ersten Vorrichtung akzeptiert wird, Bereitstellen einer Benachrichtigung über das Akzeptieren des ersten Mediums von der ersten Vorrichtung zum Server und anschließend Übertragen des ersten Mediums von dem Server zu der zweiten Vorrichtung (312); und
Nachverfolgung einer Gesamtzahl der von dem Server zu der ersten Vorrichtung über eine definierte Zeitdauer für ein der ersten Vorrichtung zugehöriges Konto übertragenen Medien.

2. Verfahren zur Verteilung und Nachverfolgung von zu einer ersten Vorrichtung gesendeten Mitteilungen nach Anspruch 1, bei welchem:
das mindestens eine Attribut der ersten Vorrichtung zugehörig ist;
die erste Vorrichtung eine Kommunikation zu der zweiten Vorrichtung sendet; und
die erste Vorrichtung die Benachrichtigung bereitstellt.

3. Verfahren zur Verteilung und Nachverfolgung von zu einer ersten Vorrichtung gesendeten Mitteilungen nach Anspruch 2, ferner enthaltend:
Identifizieren eines zweiten Mediums, das mit dem mindestens einen Attribut übereinstimmt, das der ersten Vorrichtung zugehörig ist;
Übertragen des zweiten Mediums zu der ersten Vorrichtung mit dem ersten Medium; und
Senden des ersten Mediums bei Empfang einer Benachrichtigung der Zustimmung des zweiten Mediums zu der zweiten Vorrichtung.

4. Verfahren zur Verteilung und Nachverfolgung von zu einer ersten Vorrichtung gesendeten Mitteilungen nach Anspruch 2, ferner enthaltend:
Einbetten des ersten Mediums in die Kommunikation; und
Übertragen der Kommunikation von der ersten Vorrichtung zu der zweiten Vorrichtung.

5. Verfahren zur Verteilung und Nachverfolgung von zu einer ersten Vorrichtung gesendeten Mitteilungen nach Anspruch 4, ferner enthaltend:
Erzeugen des ersten Mediums in der zweiten Vorrichtung, wenn die zweite Vorrichtung das erste Medium akzeptiert hat.

6. Verfahren zur Verteilung und Nachverfolgung von zu einer ersten Vorrichtung gesendeten Mitteilungen nach Anspruch 2, ferner enthaltend:
Einbetten des ersten Mediums in eine zweite Kommunikation; und
Übertragen der zweiten Kommunikation von der ersten Vorrichtung zu der zweiten Vorrichtung.

7. Verfahren zur Verteilung und Nachverfolgung von zu einer ersten Vorrichtung gesendeten Mitteilungen nach Anspruch 2, ferner enthaltend:
Bereitstellen einer Vorschau des ersten Mediums für die erste Vorrichtung.

8. Verfahren zur Verteilung und Nachverfolgung von zu einer ersten Vorrichtung gesendeten Mitteilungen nach Anspruch 3, bei welchem:
das erste Medium und das zweite Medium zu der ersten Vorrichtung vor der Identifizierung übertragen werden, das die erste Vorrichtung die Kommunikation zu der zweiten Vorrichtung sendet.

9. Verfahren zur Verteilung und Nachverfolgung von zu einer ersten Vorrichtung gesendeten Mitteilungen nach Anspruch 3, ferner enthaltend:
Bereitstellen von Vorschauen des ersten Mediums und des zweiten Mediums für die erste Vorrichtung in einer grafischen Benutzerschnittstelle (GUI),
wobei die GUI eine Auswahlschnittstelle für einen Benutzer der Vorrichtung bereitstellt, um entweder das erste Medium oder das zweite Medium zur Übertragung zu der zweiten Vorrichtung auszuwählen.

10. Verfahren zur Verteilung und Nachverfolgung von zu einer ersten Vorrichtung gesendeten Mitteilungen nach Anspruch 2, bei welchem das mindestens eine Attribut sich auf eine Präferenz bezieht, die von einer Website eines sozialen Netzwerkes in Bezug auf einen Benutzer der ersten Vorrichtung bereitgestellt wird.

11. Verfahren zur Verteilung und Nachverfolgung von zu einer ersten Vorrichtung gesendeten Mitteilungen nach Anspruch 2, ferner enthaltend:
Nutzung von zusätzlichen Daten, die auf mindestens eine der ersten und der zweiten Vorrichtung bezogen sind, um einen Aktivitätsstatus für die mindestens eine der ersten und der zweiten Vorrichtung zu bestimmen; und
Identifizieren eines Formats eines ersten Mediums basierend auf den zusätzlichen Daten, und/oder
Bestimmen eines Aktivitätsstatus der zweiten Vorrichtung basierend auf ihrem Ort.

12. Server (106c) für die Verteilung und Nachverfolgung von zu einer ersten Vorrichtung (102a) gesendeten Mitteilungen, welcher Server (106c) enthält:
ein Identifizierungsmodul zum
Identifizieren einer ersten Vorrichtung (102a), die mit einer zweiten Vorrichtung (102b) in Kommunikation steht; und
Identifizieren eines ersten Mediums, das mit mindestens einem Attribut übereinstimmt, das mindestens einer der ersten und der zweiten Vorrichtung (102a, 102b) zugehörig ist;
ein Werbungsauswahlmodul zum
Übertragen des ersten Mediums zu der ersten Vorrichtung (102a); und
bei Erhalt einer Benachrichtigung der Zustimmung des ersten Mediums Übertragen des ersten Mediums zu der zweiten Vorrichtung (102b),
wobei der Server eine Gesamtzahl der zu der ersten Vorrichtung (102a) von dem Server über eine vorbestimmte Zeitdauer für ein der ersten Vorrichtung (102a) zugehöriges Konto übertragenen Medien nachverfolgt.

13. Server (106c) für die Verteilung und Nachverfolgung von zu einer ersten Vorrichtung (102a) gesendeten Mitteilungen nach Anspruch 12, bei welchem:
die erste Vorrichtung (102a) eine Kommunikation mit der zweiten Vorrichtung (102b) bereitstellt;
das mindestens eine Attribut der ersten Vorrichtung (102a) zugehörig ist;
die erste Vorrichtung (102a) die Benachrichtigung bereitstellt,
wobei das Identifizierungsmodul ferner
ein zweites Medium identifiziert, das mit dem mindestens einen, der ersten Vorrichtung (102a) zugehörigen Attribut übereinstimmt; und
das Werbungsauswahlmodul ferner
das zweite Medium zu der ersten Vorrichtung (102a) mit dem ersten Medium überträgt; und
bei Erhalt einer Benachrichtigung der Zustimmung des zweiten Mediums das erste Medium zu der zweiten Vorrichtung (102b) überträgt.

14. Server für die Verteilung und Nachverfolgung von zu einer ersten Vorrichtung (102a) gesendeten Mitteilungen nach Anspruch 12, bei welchem:
das Werbungsauswahlmodul ferner das erste Medium und das zweite Medium zu der ersten Vorrichtung (102a) überträgt, bevor die erste Vorrichtung veranlasst wird, zu identifizieren, dass sie die Kommunikation zu der zweiten Vorrichtung (102b) sendet.

15. Server für die Verteilung und Nachverfolgung von zu einer ersten Vorrichtung (102a) gesendeten Mitteilungen nach Anspruch 12, bei welchem:
das Werbungsauswahlmodul ferner Vorschauen des ersten Mediums und des zweiten Mediums für die erste Vorrichtung (102a) zur Anzeige auf einer grafischen Benutzerschnittstelle (GUI) bereitstellt,
wobei die GUI eine Auswahlschnittstelle für einen Benutzer der Vorrichtung bereitstellt, um entweder das erste Medium oder das zweite Medium zur Übertragung zu der zweiten Vorrichtung (102b) auszuwählen, und/oder
das Werbungsauswahlmodul ferner
zusätzliche Daten, die auf mindestens eine der ersten und der zweiten Vorrichtung bezogen sind, nutzt, um einen Aktivitätsstatus für die mindestens eine der ersten und der zweiten Vorrichtung (102a, 102b) zu bestimmen; und
ein Format eines ersten Mediums basierend auf den zusätzlichen Daten identifiziert, und/oder
das Werbungsauswahlmodul ferner
das erste Medium in der Kommunikation einbettet; und
die Kommunikation von der ersten Vorrichtung (102a) zu der zweiten Vorrichtung (102b) überträgt.

## Revendications

1. Procédé de distribution et de suivi de messages envoyés à un premier dispositif, ledit procédé comprenant les étapes consistant à :
identifier un second dispositif qui est en communication avec ledit premier dispositif ;
identifier un premier contenu multimédia qui correspond à au moins un attribut associé à au moins un des premier et second dispositifs (306) ;
transmettre ledit contenu multimédia vers ledit premier dispositif (308), à partir d'un serveur ;
déterminer sur ledit premier dispositif s'il convient ou non d'accepter ledit premier contenu multimédia afin de produire une partie d'une sortie dudit dispositif ;
si ledit contenu multimédia est accepté par ledit premier dispositif, fournir une notification d'acceptation dudit premier contenu multimédia par ledit premier dispositif audit serveur et puis transmettre ledit premier contenu multimédia audit second dispositif (312), à partir dudit serveur ; et
suivre le nombre total des contenus multimédias transmis audit premier dispositif par ledit serveur sur une période de temps prédéterminée, pour un compte associé audit premier dispositif.

2. Procédé de distribution et de suivi de messages envoyés à un premier dispositif selon la revendication 1, dans lequel :
ledit au moins un attribut est associé audit premier dispositif ;
ledit premier dispositif envoie une communication audit second dispositif ;
ledit premier dispositif fournit ladite notification.

3. Procédé de distribution et de suivi de messages envoyés à un premier dispositif selon la revendication 2, comprenant en outre les étapes consistant à :
identifier un second contenu multimédia qui correspond audit au moins un attribut associé audit premier dispositif ;
transmettre ledit second contenu multimédia vers ledit premier dispositif avec ledit premier contenu multimédia ; et
après réception d'une notification d'approbation dudit second contenu multimédia, transmettre ledit premier contenu multimédia audit second dispositif.

4. Procédé de distribution et de suivi de messages envoyés à un premier dispositif selon la revendication 2, comprenant en outre les étapes consistant à :
intégrer ledit premier contenu multimédia dans ladite communication ; et
transmettre ladite communication entre ledit premier dispositif et ledit second dispositif.

5. Procédé de distribution et de suivi de messages envoyés à un premier dispositif selon la revendication 4, comprenant en outre l'étape consistant à :
produire ledit premier contenu multimédia sur ledit second dispositif lorsque ledit second dispositif a accepté ledit premier contenu multimédia.

6. Procédé de distribution et de suivi de messages envoyés à un premier dispositif selon la revendication 2, comprenant en outre les étapes consistant à :
intégrer ledit premier contenu multimédia dans une seconde communication ; et
transmettre ladite seconde communication entre ledit premier dispositif et ledit second dispositif.

7. Procédé de distribution et de suivi de messages envoyés à un premier dispositif selon la revendication 2, comprenant en outre l'étape consistant à :
fournir une prévisualisation dudit premier contenu multimédia audit premier dispositif.

8. Procédé de distribution et de suivi de messages envoyés à un premier dispositif selon la revendication 3, dans lequel :
ledit premier contenu multimédia et ledit second contenu multimédia sont transmis audit premier dispositif avant ladite étape d'identification que ledit premier dispositif est en train d'envoyer ladite communication audit second dispositif.

9. Procédé de distribution et de suivi de messages envoyés à un premier dispositif selon la revendication 3, comprenant en outre l'étape consistant à :
fournir des prévisualisations dudit premier contenu multimédia et dudit second contenu multimédia audit premier dispositif dans une interface utilisateur graphique ;
dans lequel ladite interface utilisateur graphique fournit une interface de sélection afin qu'un utilisateur dudit dispositif puisse choisir soit ledit premier contenu multimédia, soit ledit second contenu multimédia pour sa transmission vers ledit second dispositif.

10. Procédé de distribution et de suivi de messages envoyés à un premier dispositif selon la revendication 2, dans lequel ledit au moins un attribut intéresse une préférence provenant d'un site de réseau social et concernant un utilisateur dudit premier dispositif.

11. Procédé de distribution et de suivi de messages envoyés à un premier dispositif selon la revendication 2, comprenant en outre les étapes consistant à :
utiliser des données supplémentaires concernant au moins un desdits premier et second dispositifs, afin de déterminer un état d'activité dudit au moins un dispositif parmi lesdits premier et second dispositifs ; et
identifier un format d'un premier contenu multimédia en fonction desdites données supplémentaires ; et/ou
déterminer un état d'activité dudit second dispositif en fonction de sa position.

12. Serveur (106c) de distribution et de suivi de messages envoyés à un premier dispositif (102a), ledit serveur (106c) comprenant :
un module d'identification destiné à :
identifier un premier dispositif (102a) qui est en communication avec un second dispositif (102b) ; et
identifier un premier contenu multimédia qui correspond à au moins un attribut associé à au moins un des premier et second dispositifs (102a, 102b) ;
un module de sélection de publicité destiné à :
transmettre ledit premier contenu multimédia vers ledit premier dispositif (102a) ; et
après réception d'une notification d'approbation dudit premier contenu multimédia, transmettre ledit premier contenu multimédia vers ledit second dispositif (102b) ;
dans lequel ledit serveur suit un nombre total des contenus multimédias transmis audit premier dispositif (102a) par ledit serveur sur une période de temps prédéterminée, pour un compte associé audit premier dispositif (102a).

13. Serveur (106c) de distribution et de suivi de messages envoyés à un premier dispositif (102a) selon la revendication 12, dans lequel :
ledit premier dispositif (102a) fournit une communication audit second dispositif (102b) ;
ledit au moins un attribut est associé audit premier dispositif (102a) ;
ledit premier dispositif (102a) fournit ladite notification ;
ledit module d'identification est en outre destiné à :
identifier un second contenu multimédia qui correspond audit au moins un attribut associé audit premier dispositif (102a) ; et
ledit module de sélection de publicité est en outre destiné à :
transmettre ledit second contenu multimédia audit premier dispositif (102a) avec ledit premier contenu multimédia ; et
après réception d'une notification d'approbation dudit second contenu multimédia, transmettre ledit premier contenu multimédia audit second dispositif (102b).

14. Serveur de distribution et de suivi de messages envoyés à un premier dispositif (102a) selon la revendication 12, dans lequel :
ledit module de sélection de publicité transmet en outre ledit premier contenu multimédia et ledit second contenu multimédia audit premier dispositif (102a) avant que ledit premier dispositif n'identifie qu'il envoie ladite communication audit second dispositif (102b).

15. Serveur de distribution et de suivi de messages envoyés à un premier dispositif (102a) selon la revendication 12, dans lequel ledit module de sélection de publicité fournit en outre des prévisualisations dudit premier contenu multimédia et dudit second contenu multimédia audit premier dispositif (102a) pour qu'elles soient affichées dans une interface utilisateur graphique ;
dans lequel ladite interface utilisateur graphique fournit une interface de sélection afin qu'un utilisateur dudit dispositif sélectionne soit ledit premier contenu multimédia, soit ledit second contenu multimédia pour sa transmission vers ledit second dispositif (102b) ; et/ou
ledit module de sélection de publicité est en outre destiné à :
utiliser des données supplémentaires concernant au moins un desdits premier et second dispositifs, afin de déterminer un état d'activité dudit au moins un dispositif parmi lesdits premier et second dispositifs (102a, 102b) ; et
identifier un format d'un premier contenu multimédia en fonction desdites données supplémentaires ;
et/ou
ledit module de sélection de publicité est en outre destiné à :
intégrer ledit premier contenu multimédia dans ladite communication ; et
transmettre ladite communication entre ledit premier dispositif (102a) et ledit second dispositif (102b).
